Europäisches Patentamt

European Patent Office

Office européen des brevets

(19)

(11) Veröffentlichungsnummer: **0 263 261**
**A1**

# (12) EUROPÄISCHE PATENTANMELDUNG

(21) Anmeldenummer: 87111505.1

(22) Anmeldetag: 08.08.87

(51) Int. Cl.⁴: **G01D 5/34** , G01D 5/26

(30) Priorität: 05.09.86 CH 3578/86

(43) Veröffentlichungstag der Anmeldung:
**13.04.88 Patentblatt 88/15**

(84) Benannte Vertragsstaaten:
**CH DE FR GB LI SE**

(71) Anmelder: **BBC Brown Boveri AG**

**CH-5401 Baden(CH)**

(72) Erfinder: **Kaufmann, Meinolph**
**Im Tobelacher 2**
**CH-5406 Baden(CH)**
Erfinder: **Klöti, Karl**
**Hiltibergstrasse 46**
**CH-5442 Fislisbach(CH)**
Erfinder: **Nehring, Jürgen, Dr.**
**Neustrasse 47**
**CH-5430 Wettingen(CH)**
Erfinder: **Schad, Hanspeter, Dr.**
**Boldistrasse 6**
**CH-5415 Rieden(CH)**

(54) Optoelektronischer Wegaufnehmer.

(57) Es wird ein optoelektronischer Wegaufnehmer für die absolute Wegmessung im Submikrometerbereich beschrieben, der gemäss einem Ausführungsbeispiel mit einer Leuchtdiode (L) als Lichtquelle und zwei in Differenzschaltung angeordneten, gegenüberliegenden Photodioden (D1, D2) als Strahlungssensoren aufgebaut ist.

Die Wegaufnahme erfolgt über eine zwischen Lichtquelle und Strahlungssensoren verschiebbare Blende (2), welche die Abschattung der Photodioden (D1, D2) gegenläufig beeinflusst.

Zur Homogenisierung der Ausleuchtung sind spezielle Mittel vorgesehen, die gemäss einem Ausführungsbeispiel aus einem im Strahlengang angeordneten Korrekturfilter (6) bestehen.

Fig.2

# Optoelektronischer Wegaufnehmer

## Technisches Gebiet

Die Erfindung bezieht sich auf einen optoelektronischen Wegaufnehmer. Sie betrifft speziell einen optoelektronischen Wegaufnehmer zur absoluten Wegmessung im Submikrometerbereich, insbesondere für die Positionierung von Lichtwellenleitern.

## Stand der Technik

Für die Realisierung von empfindlichen und genauen Wegaufnehmern sind eine Reihe verschiedener Messprinzipien gebräuchlich, die teilweise elektronisch, teilweise optisch oder optoelektronisch arbeiten.

Herkömmliche nichtoptische Sensorsysteme zur absoluten Wegmessung im Submikrometerbereich arbeiten z.B. resistiv (Widerstands-Dehnungsmessstreifen), induktiv (Differentialtransformatoren) oder kapazitiv (Differentialkondensatoren). Diese bekannten Systeme sind, was die erforderliche Elektronik betrifft, sehr aufwendig.

Optische Sensoren, mit denen direkt Längen aufgelöst werden können, wie z.B. eine Lateraldiode oder ein PSD (P osition Sensitive Detector), sind zwar in der Signalverarbeitung einfacher, jedoch teilweise nichtlinear und benötigen eine spezielle Punktlichtquelle.

Es ist nun andererseits auf dem Gebiet der Positioniersteuerung bekannt, zur Lageregelung ein Sensorsystem zu verwenden, bei dem zwischen einer Lichtquelle und zwei in Differenzschaltung angeordneten Photodioden eine bewegliche, motorgetriebene Lochblende vorgesehen ist, die über einen Regelkreis solange verschoben wird, bis die Ausgangssignale der Photodioden exakt gleich sind (Elektronik, Heft 11, Mai 1986, S. 108).

Diese Positioniersteuerung ist jedoch nicht für eine absolute Wegmessung geeignet, sondern lediglich dahingehend ausgelegt, das Einregeln einer eindeutigen Position zu gewährleisten.

Insbesondere für die reproduzierbare und weggeregelte Einkopplung von Licht in Lichtwellenleiter, gerade bei den sogenannten Monomodefasern mit einem Kerndurchmesser kleiner 10 um, ist eine absolute Vorgabe der Positionierung im Bereich von 1/10 um erforderlich, die zugleich thermisch und mechanisch stabil ist. Eine Lösung dieser Einkopplungsprobleme mit herkömmlichen Wegaufnehmer-Systemen ist jedoch mechanisch und elektronisch sehr aufwendig.

## Darstellung der Erfindung

Es ist nun Aufgabe der Erfindung, einen optoelektronischen Wegaufnehmer zu schaffen, der bei hoher Präzision und Empfindlichkeit zugleich einfach aufgebaut werden kann und mechanisch und thermisch stabil ist.

Die Aufgabe wird bei einem optoelektronsichen Wegaufnehmer der eingangs genannten Art durch die folgenden Merkmale gelöst, nämlich durch:
-wenigstens eine Lichtquelle,
-gegenüber der Lichtquelle wenigstens zwei flächenhafte, nebeneinander angeordnete, thermisch gekoppelte, optoelektronische Strahlungssensoren,
-eine den Strahlungssensoren nachgeschaltete Auswerteelektronik,
-eine zwischen der Lichtquelle und den Strahlungssensoren angeordnete Blende, wobei
-die Blende parallel zu den Strahlungssensoren verschiebbar ist, und wobei
-die Blende so ausgebildet ist, dass bei einer Verschiebung der Blende die beleuchtete Fläche zumindest des einen Strahlungssensors verändert wird, und
-Mittel, die eine homogene Ausleuchtung der Strahlungssensoren gewährleisten

Bei dieser erfindungsgemässen Lösung sind zwar teilweise ähnliche Elemente vorhanden, wie bei der bekannten Positioniersteuerung. Der entscheidende Unterschied besteht jedoch darin, dass hier wegen der anderen Gattung, d.h. wegen der Wegmessung, die bei der bekannten Positioniersteuerung gar nicht durchgeführt wird, besondere Massnahmen erforderlich sind.

Diese besonderen Massnahmen umfassen insbesondere Mittel, die eine homogene Ausleuchtung der Strahlungssensoren gewährleisten.

Gemäss einem ersten Ausführungsbeispiel bestehen die Mittel zur homogenen Ausleuchtung in einem Korrekturfilter, welches zwischen der einzigen Lichtquelle und den Strahlungssensoren angeordnet ist, und dessen Transmission über die Filterfläche so variiert, dass die Inhomogenitäten in der Intensitätsverteilung der Lichtquelle gerade aufgehoben werden.

Das Korrekturfilter ist dabei vorzugsweise ein mit der Lichtquelle im entsprechenden Abstand belichtetes Filmnegativ.

Gemäss einem zweiten Ausführungsbeispiel sind als Mittel zur homogenen Ausleuchtung wenigstens zwei als Lichtquellen arbeitende Leuchtdioden vorgesehen, welche in Richtung der Verschiebungsachse der Blende hintereinander angeordnet sind.

Als Lichtquellen werden bevorzugt im Infraroten emittierende Leuchtdioden, als Strahlungssensoren entsprechende infrarotempfindliche Photodioden (Si-PIN-Dioden) verwendet.

Mögliche Helligkeitsschwankungen der Leuchtdioden bei Temperaturänderung werden vorzugsweise dadurch ausgeregelt, dass neben den Photodioden wenigstens eine Referenz-Photodiode vorgesehen ist, die von den Leuchtdioden in jeder Stellung der Blende voll ausgeleuchtet wird, und das Ausgangssignal der Referenz-Photodiode einer Regelschaltung zugeführt wird, die einen geregelten Strom durch die Leuchtdioden liefert.

Durch die Anordnung auf einem gemeinsamen gut wärmeleitenden Substrat, insbesondere in Form monolithisch integrierter Mehrfach-Photodioden, wird erreicht, dass sich alle Photodioden auf der gleichen Temperatur befinden. Die Referenz-Photodiode regelt dann alle Helligkeitsschwankungen aus und kompensiert, da sie auf gleicher Temperatur wie die anderen Photodioden ist, deren Temperaturgang.

Diese und weitere Ausführungsbeispiele sind Gegenstand der Unteransprüche.

Kurze Beschreibung der Zeichnungen

Nachfolgend wird die Erfindung im Zusammenhang mit der Zeichnung anhand von Ausführungsbeispielen beschrieben und näher erläutert. Es zeigen:

Fig. 1 den prinzipiellen Aufbau einer bekannten Positioniersteuerung,

Fig. 2 den prinzipiellen Aufbau eines optoelektronischen Wegaufnehmers gemäss einem ersten Ausführungsbeispiel der Erfindung,

Fig. 3A schematisch die inhomogene Intensitätsverteilung einer Leuchtdiode nach Fig. 2,

Fig. 3B die Transmission eines Korrekturfilters zur Homogenisierung der Intensitätsverteilung nach Fig. 3A,

Fig. 3C die homogenisierte Intensitätsverteilung durch den Einsatz des Korrekturfilters,

Fig. 4 eine Variante zum Ausführungsbeispiel der Fig. 2,

Fig. 5 eine gegenüber Fig. 4 veränderte Variante mit erweitertem Messbereich,

Fig. 6 den prinzipiellen Aufbau eines optoelektronischen Wegaufnehmers gemäss einem zweiten Ausführungsbeispiel der Erfindung,

Fig. 7A - D verschiedene Teilansichten einer Variante des Ausführungsbeispiels nach Fig. 6,

Fig. 8A ein bevorzugtes Ausführungsbeispiel einer Auswerteelektronik mit Regelteil für einen Wegaufnehmer nach Fig. 6,

Fig. 8B eine Variante der Auswerteelektronik nach Fig. 8A mit geänderter Differenz-Verstärkerschaltung,

Fig. 9 eine Messkurve für einen Wegaufnehmer gemäss Fig. 6 und 8A,

Fig. 10A, B ein Ausführungsbeispiel für einen Wegaufnehmer nach der Erfindung mit Strahlungssensoren in Form einer monolithisch integrierten Doppel-Photodiode (Seitenansicht und Draufsicht),

Fig. 11A - C verschiedene beispielhafte Ausführungsformen eines Korrekturfilters für einen Wegaufnehmer gemäss Fig. 10A, B, und

Fig. 12 das Blockschaltbild einer erprobten Auswerteelektronik mit Regelungselektronik für einen Wegaufnehmer gemäss Fig. 10A, B.

Wege zur Ausführung der Erfindung

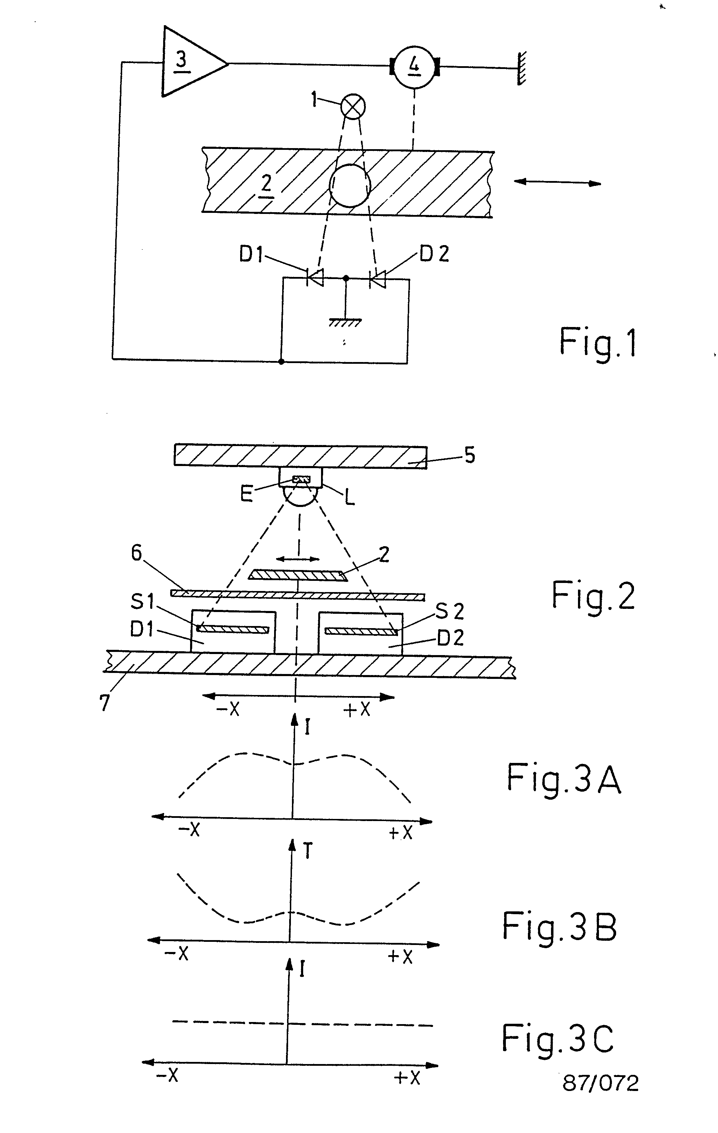

In Fig. 1 ist der prinzipielle Aufbau einer optoelektronischen Positioniersteuerung wiedergegeben, wie er aus der eingangs zitierten Druckschrift bekannt ist.

Eine nicht näher bezeichnete Lichtquelle 1 bestrahlt durch die Oeffnung einer verschiebbaren Blende 2 zwei in Differenzschaltung angeordnete Photodioden D1 und D2. Das Differenzsignal dieser Photodioden D1, D2 wird auf den Eingang eines Leistungsverstärkers 3 gegeben, der einen Stellmotor 4 ansteuert, der seinerseits die Verschiebung der Blende 2 bewirkt.

Dieser Regelkreis bringt die Blende 1 in eine solche Stellung, dass die Photodioden D1 und D2 gleich ausgeleuchtet werden, d.h. das Differenzsignal zu Null wird. Es kommt hierbei also lediglich darauf an, dass diese Endposition eindeutig bestimmt ist und das Ausgangssignal der Differenzschaltung für abweichende Positionen genügend gross ist, um den Stellmotor 4 ansteuern zu können. Eine Wegmessung ist hier nicht erforderlich und vorhanden.

Ganz anders ist dies dagegen bei einem ersten Ausführungsbeispiel der Erfindung, dessen prinzipieller Aufbau in Fig. 2 dargestellt ist: Auf einem Sendersubstrat 5, z.B. einem stabilen Keramiksubstrat, ist eine Leuchtdiode L (mit integrierter Linse) angeordnet. Der Leuchtdiode L gegenüber sind zwei Photodioden D1 und D2 nebeneinanderliegend auf einem entsprechenden gut wärmeleitenden Empfängersubstrat 7 angebracht. Die Sensorflächen S1 und S2 der Photodioden D1 und D2 liegen im Strahlungskegel, der von der Emitterfläche E der Leuchtdiode L ausgeht.

Zwischen der Leuchtdiode L und den Photodioden D1, D2 ist eine parallel zu den Sensorflächen S1, S2 verschiebbare Blende 2 angeordnet, die von ihrer Grösse her so bemessen ist, dass sie immer nur Teile der Sensorflächen S1, S2 abschattet und bei einer Verschiebung die Abschattung der einen Fläche verkleinert und gleichzeitig die Abschattung der anderen Fläche vergrössert.

Zwischen der Leuchtdiode L und den Photodioden D1, D2 ist weiterhin ein Korrekturfilter 6 angeordnet (im Falle der Fig. 2 zwischen Blende 2 und Photodioden D1, D2). Dieses Korrekturfilter 6 ist in seiner Dämpfungs-bzw. Filterfunktion so ausgelegt, dass aus der ursprünglich inhomogenen Intensitätsverteilung im Strahlenkegel vor dem Filter (Fig. 3A) eine homogene Intensitätsverteilung hinter dem Filter wird (Fig. 3C). Erreicht wird dies durch eine im Korrekturfilter 6 ortsabhängige Transmission T, die in etwa reziprok zur Intensitätsverteilung im Kegel ist (Fig. 3B). Die Ortskoordinaten +x und -x in den Fig. 3A - C entsprechen den in Fig. 2 eingetragenen.

Ein geeignetes Korrekturfilter 6 kann auf verschiedene Weisen hergestellt werden:

-In einer Vorrichtung gemäss Fig. 2 (jedoch ohne die Blende) wird anstelle des Korrekturfilters 6 ein Stück eines infrarotempfindlichen Films montiert (wenn die Lichtquelle eine im Infrarot emittierende Leuchtdiode ist) und belichtet. Durch entsprechende Wahl des Negativ-Filmes und der Entwicklungstechnik ist es möglich, eine der Bestrahlungsintensität proportionale Schwärzung des Films zu erreichen, der dann als Korrekturfilter eingesetzt werden kann.

-Wenn die Intensitätsverteilung der Lichtquelle bekannt ist, kann mit Hilfe einer elektronisch gesteuerten Lichtquelle auf einem geeigneten Photofilm per Computer das gewünschte Absorptionsprofil erzeugt werden.

-Eine Kunststoffspritzgussmaschine erzeugt aus leicht IR-absorbierendem Material ein in der Dicke der Intensitätsverteilung angepasstes Filterplättchen.

Diese drei Herstellungsmethoden, von denen die erste zugleich wegen ihrer Einfachheit bevorzugt wird, stellen nur ausgewählte Beispiele aus einer Vielzahl möglicher Verfahren dar.

In der Wegaufnehmeranordnung nach Fig. 2 ist eine Leuchtdiode L mit integrierter Linse dargestellt. Eine solche Leuchtdiode auf GaAs-Basis ist z.B. unter der Typenbezeichnung BN 501 von der Firma Stanley kommerziell erhältlich. Als Photodioden D1 und D2 kommen beispielsweise planare Si-Photodioden vom Typ BPX 90 K in Betracht.

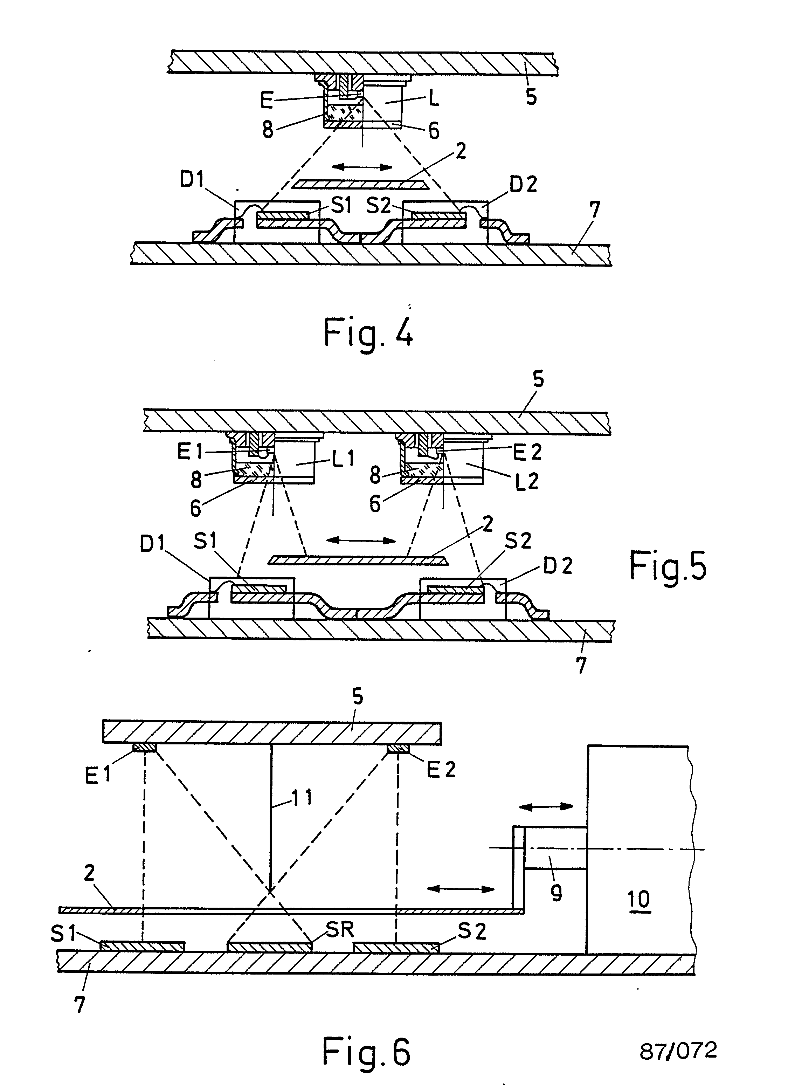

Eine andere Möglichkeit der Anordnung des Korrekturfilters 6 ist im Wegaufnehmer der Fig. 4 wiedergegeben. Hier wird eine Leuchtdiode L im Metallgehäuse mit einem planaren Glasfenster 8 eingesetzt. Eine solche Leuchtdiode ist z.B. unter der Typenbezeichnung HE 8801 von der Firma Hitachi im Handel erhältlich.

Wird eine derartige, hermetisch verschlossene, infrarotemittierende LED verwendet, so kann der IR-Film für das Korrekturfilter 6 (z.B. ein Kodak-Film HJE 2481) im Kontakt mit dem Glasfenster 8 belichtet werden. Nach dem Entwickeln wird dann das entsprechende Filterscheibchen ausgestanzt und unter dem Mikroskop mit einem UV-härtbaren, transparenten Klebstoff (z.B. Vitralit 7105 der Firma 3M) auf die LED aufgeklebt.

Damit wird eine homogene Lichtquelle geschaffen, die elektrooptisch vermessen, d.h. vor ihrem Einbau bezüglich der Homogenität ihrer Flächenausleuchtung überprüft werden kann.

Der ausnutzbare Messbereich eines optoelektronischen Wegaufnehmers nach Fig. 2 oder 4 ist begrenzt durch den Strahlungskegel der einen Leuchtdiode L. Um nun einen Wegaufnehmer mit erweitertem Messbereich zu erhalten, können, wie in Fig. 5 gezeigt, in Richtung der Verschiebungsachse der Blende 2 mehrere Leuchtdioden L1, L2 hintereinander angeordnet werden. Auf diese Weise wird ein verlängerter Bereich homogener Ausleuchtung geschaffen, wobei die Korrekturfilter 6 entweder wieder direkt auf den Glasfenstern 8 der Leuchtdioden L1, L2 angebracht (Fig. 5) oder, entsprechend Fig. 2, getrennt von den Leuchtdioden angeordnet sein können.

In den dargestellten Beispielen aus Fig. 2, 4 und 5 ist die Blende 2 jeweils nur schematisch eingezeichnet. Es versteht sich von selbst, dass über die bewegliche Blende 2 gerade der zu messende Weg in den Wegaufnehmer eingekoppelt wird, d.h., dass die Blende 2 in geeigneter Weise mit demjenigen Gegenstand verbunden ist, dessen zurückgelegter Weg gemessen werden soll.

Dies wird an dem schematisierten Aufbau des Wegaufnehmers in Fig. 6 deutlich, bei dem lediglich die Emitterflächen E1, E2 der Leuchtdioden und die Sensorflächen S1, S2 und SR der Photodioden bzw. einer Referenz-Photodiode dargestellt sind. Die Blende 2, die, im Unterschied zu den Beispielen aus den Fig. 2, 4 und 5 und ähnlich wie bei der Positioniersteuerung aus Fig. 1, ihre Oeffnung im Kernbereich der Strahlungskegel hat, ist hier mit der Schubstange 9 eines z.B. elektromagnetisch arbeitenden Aktors 10 verbunden, der (in der Fig. nicht gezeigt) den Lichtwellenleiter verschiebt. Der Verschiebungsweg kann dann über die Stellung der Blende 2 ermittelt werden.

Während in den Ausführungsbeispielen der Fig. 2, 4 und 5 als Mittel zur Homogenisierung der Ausleuchtung die beschriebenen Korrekturfilter 6 vorgesehen sind, wird beim Ausführungsbeispiel der Fig. 6 die Homogenisierung nur durch Kombination zweier Strahlungskegel erreicht, die von den beiden Emitterflächen E1 und E2 ausgehen. Die relative Lage der Emitterflächen E1, E2 zueinander bestimmt sich dabei in einfacher Weise nach dem bekannten Strahlungsfeld einer einzelnen Emitterfläche bzw. Leuchtdiode.

Als Besonderheit ist bei dem Beispiel aus Fig. 6 eine Referenz-Photodiode auf dem Empfängersubstrat zwischen den beiden Photodioden angeordnet. Die Sensorfläche SR dieser Referenz-Photodiode wird in jeder Stellung der Blende 2 von jeder Leuchtdiode ausgeleuchtet, so dass der von ihr abgegebene Photostrom direkt zur Ueberwachung und Regelung der Leuchtdioden verwendet werden kann.

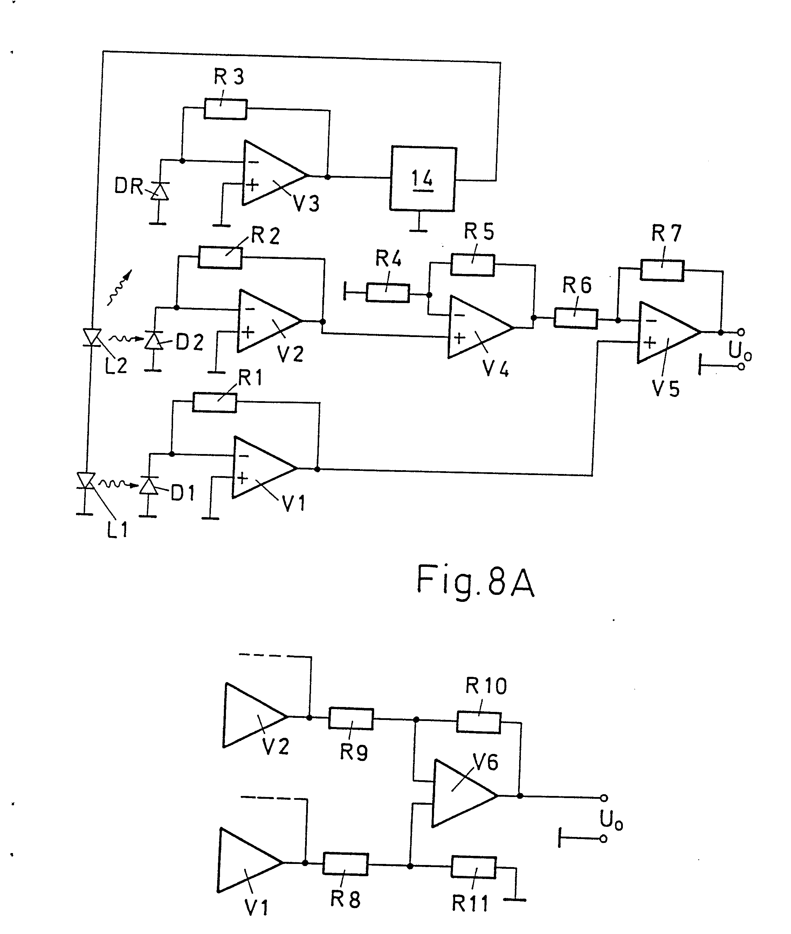

Hierdurch wird, neben der Differenzbildung bei den Photodioden, eine weitere Massnahme zur Stabilisierung der Messeinrichtung ermöglicht, indem Helligkeitsschwankungen und die Alterung der IR-Diode über die Stromversorgung der Leuchtdioden ausgeregelt werden können. Eine entsprechende Auswerteund Regelelektronik ist in Fig. 8A und 8B wiedergegeben und wird an späterer Stelle noch erläutert.

Um bei der in Fig. 6 gezeigten Art der Blende 2 eine Ueberlappung der Strahlungskegel im Bereich der Sensorflächen S1 und S2 zu verhindern, ist in der Mitte zwischen den Emitterflächen E1, E2 eine senkrecht stehende Trennblende 11 vorgesehen, die zwar die jeweilige Sensorfläche S1 bzw. S2 zur gegenüberliegenden Emitterfläche E2 bzw. E1 hin abschattet, die Ausleuchtung der Sensorfläche SR jedoch unbeeinflusst lässt.

In dem Ausführungsbeispiel der Fig. 6 ist nur eine Referenz-Photodiode (Sensorfläche SR) für zwei Leuchtdioden (Emitterflächen E1, E2) eingesetzt. Dies erschwert die Ausregelung von Helligkeitsschwankungen, die nur bei einer der beiden Leuchtdioden auftreten. Es ist daher vorteilhaft, jeder der Leuchtdioden eine eigene Referenz-Photodiode zuzuordnen, so dass für jede Leuchtdiode ein eigener, unabhängiger Regelkreis entsteht.

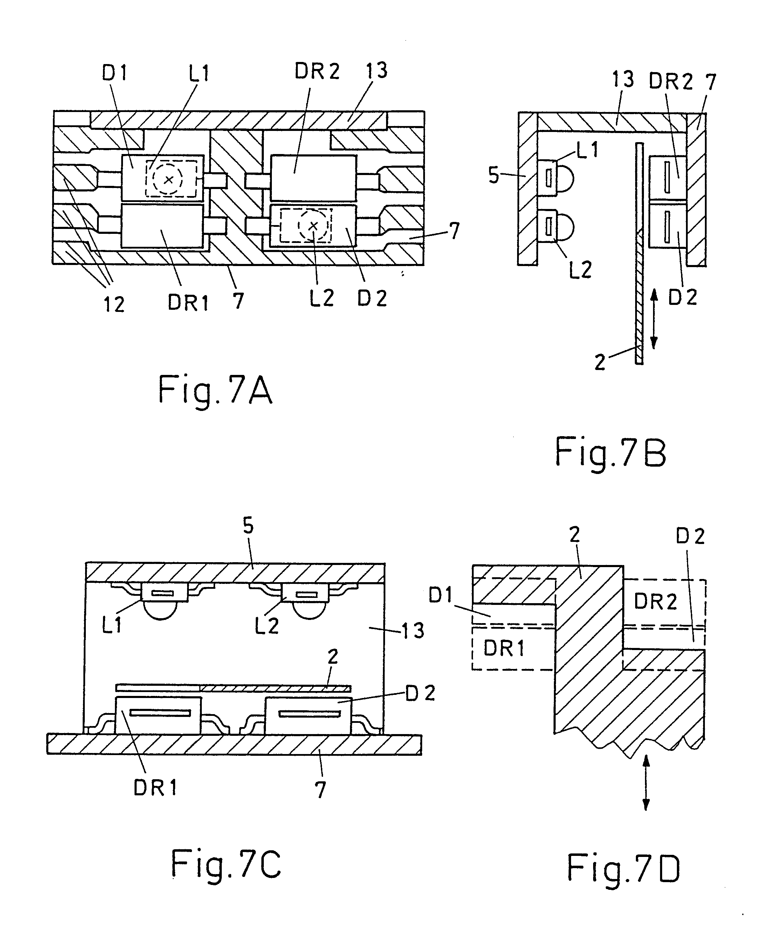

Die verschiedenen Teilansichten einer solchen Wegaufnehmer-Anordnung sind in Fig. 7A - 7D dargestellt. Hier sind (Fig. 7A) auf dem mit Leiterbahnen 12 versehenen Empfängersubstrat 7 paarweise insgesamt vier Photodioden D1, D2 bzw. Referenz-Photodioden DR1, DR2 angeordnet, wobei jeweils eine Photodiode und eine Referenz-Photodiode ein Paar bilden (D1, DR1 bzw. D2, DR2).

Im einen Paar ist die Reihenfolge von Photodiode und Referenz-Photodiode gegenüber dem anderen Paar vertauscht, so dass sowohl die Photodioden D1, D2 als auch die Referenz-Photodioden DR1, DR2 über Kreuz angeordnet sind.

Auf dem dem Empfängersubstrat 7 gegenüberliegenden und mit diesem durch eine Verbindungswand 13 verbundenen Sendersubstrat 5 sind zwei Leuchtdioden L1 bzw. L2 angebracht, deren Zentrum genau mit dem Zentrum der zugehörigen Photodiode D1 bzw. D2 übereinstimmt (in Fig. 7A gestrichelt angedeutet).

Die zwischen den Leuchtdioden L1, L2 und den Photodioden D1, D2 verschiebbar angeordnete Blende 2 hat die in Fig. 7D dargestellte Form: Während die Referenz-Photodioden DR1, DR2 von den zugeordneten Leuchtdioden L1, L2 in jeder Blendenstellung voll ausgeleuchtet werden, sind die Photodioden D1 und D2 von der Blende 2 teilweise so abgeschattet, dass eine Verschiebung der Blende 2 bei einer Photodiode die Abschattung vergrössert, bei der anderen dagegen gleichzeitig verkleinert.

Zur Homogenisierung der Ausleuchtung ist auch hier wieder ein nicht eingezeichnetes Korrekturfilter vorgesehen, das entweder direkt an den Leuchtdioden angebracht oder auf andere Weise in den Strahlengang eingeschoben sein kann.

Bezüglich der Auswerte-und Regelelektronik für eine Wegaufnehmer-Anordnung nach Fig. 6 sind in den Fig. 8A und 8B zwei Ausführungsbeispiele wiedergegeben. Die Photodioden D1 und D2 sowie die Referenz-Photodiode DR, deren Sensorflächen S1, S2 und SR in Fig. 6 eingezeichnet sind, bilden jeweils mit entsprechenden Rückkopplungswiderständen R1, R2 und R3 und Operationsverstärkern V1, V2 und V3 vom Photostrom gesteuerte Spannungsquellen.

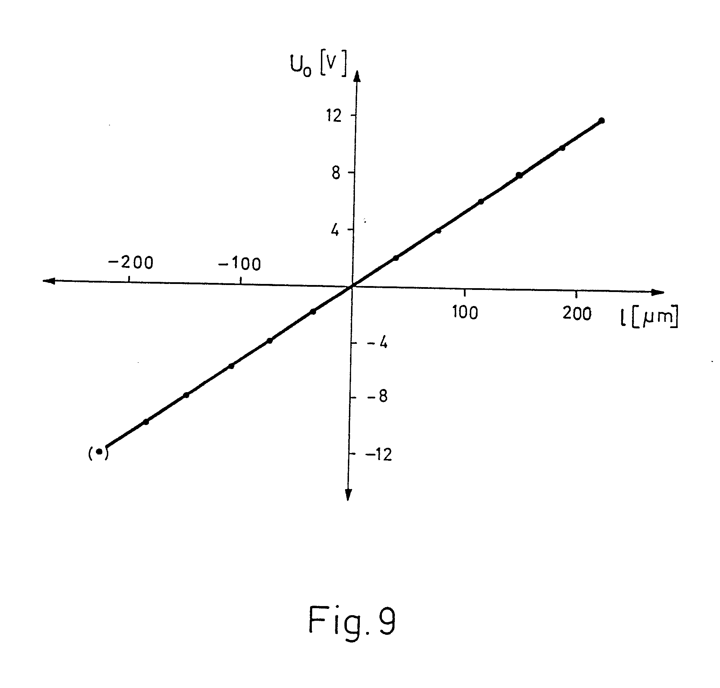

Die Ausgangssignale der Operationsverstärker V1 und V2 werden zur Differenzbildung einer Differenz-Verstärkerschaltung mit hoher Eingangsimpedanz zugeführt, die aus den Operationsverstärkern V4, V5 und den Widerständen R4 ... R7 besteht. Die am Ausgang des Operationsverstärkers V5 anstehende Ausgangsspannung $U_o$ ist dann direkt proportional zum Verschiebungsweg l der Blende 2, gemessen von ihrer symmetrischen Mittelposition aus (Fig. 9).

Das Ausgangssignal des Operationsverstärkers V3 wird einer Regelschaltung 14 zugeführt, die ihrerseits die Leuchtdioden L1 und L2 mit Strom versorgt. Auf die detaillierte Beschreibung der Regelschaltung 14 wird hier verzichtet, weil sie dem Fachmann ohnehin geläufig ist.

Anstelle der Differenz-Verstärkerschaltung aus Fig. 8A mit den zwei Operationsverstärkern V4 und V5 kann natürlich auch die an sich bekannte Schaltung mit nur einem Operationsverstärker V6 und den Widerständen R8 ... R11 gemäss Fig. 8B treten.

In Fig. 9 ist schliesslich die gemessene Charakteristik einer Anordnung nach Fig. 6 mit einer Auswerteelektronik nach Fig. 8A wiedergegeben als Funktion der Ausgangsspannung $U_o$ über der Verschiebung I der Blende 2. Man erkennt die ausgezeichnete Linearität und die hohe Empfindlichkeit bei diesem Ausführungsbeispiel eines optoelektronischen Wegaufnehmers nach der Erfindung.

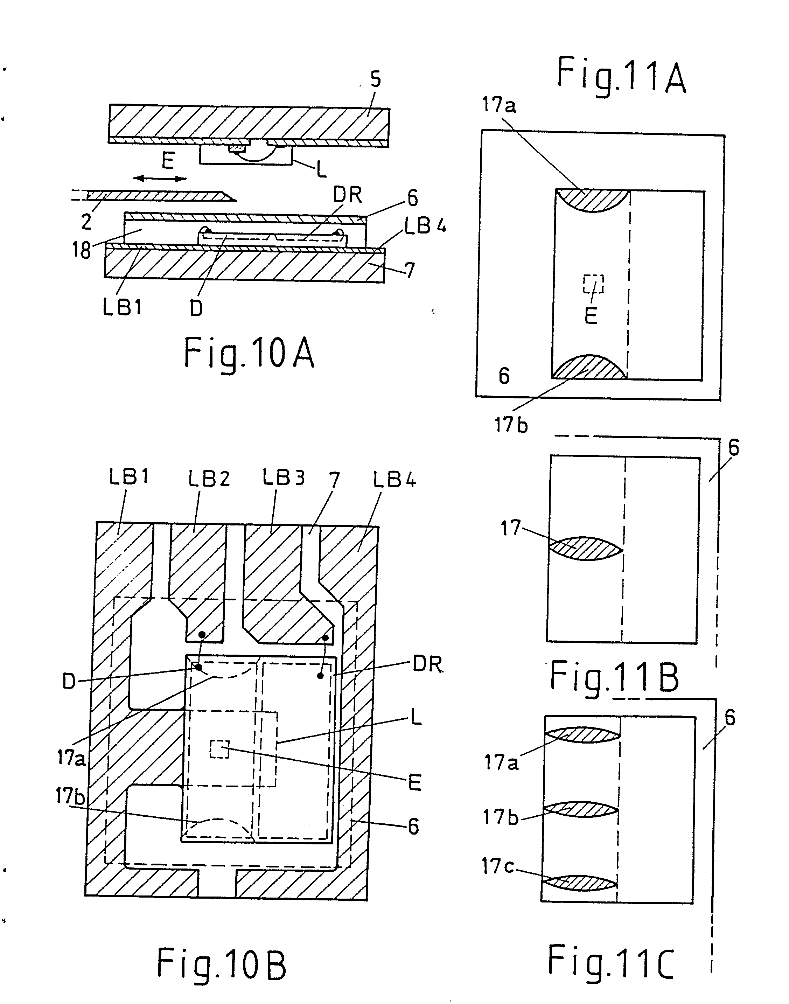

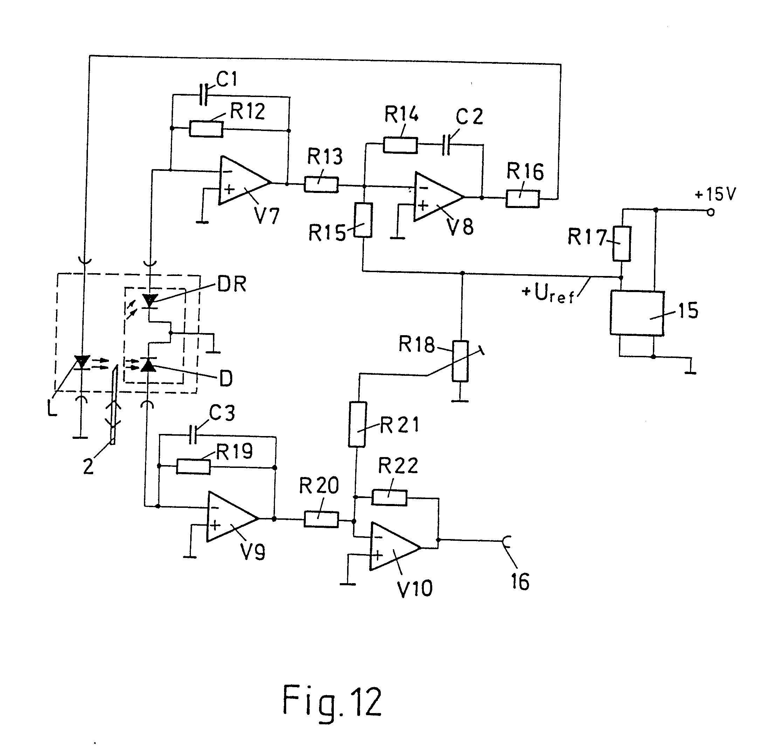

Ein weiteres Ausführungsbeispiel für den anmeldungsgemässen Wegaufnehmer, das sich durch einen besonders kompakten Aufbau und einen erweiterten linearen Messbereich auszeichnet, soll anhand der Fig. 10A, B, C und Fig. 12 erläutert werden.

In Fig. 10A ist ein solcher, in Hybridtechnik aufgebauter, miniaturisierter, optoelektronischer Wegaufnehmer in Seitenansicht dargestellt. Auf dem keramischen Empfängersubstrat 7 sind die Strahlungssensoren als Photodiode D und Referenz-Photodiode DR in Form einer monolithisch integrierten Silizium-Doppel-Photodiode (z.B. vom Typ Siemens BPX 48) aufgebondet und mit einer UV-härtbaren, transparenten Abdeckung 18 versehen.

Das keramische Sendersubstrat 5, das dem Empfängersubstrat 7 gegenüberliegt, ist mit einer in gleicher Weise aufgebrachten, Infrarot-emittierenden Leuchtdiode L als Lichtquelle bestückt.

Die Leuchtdiode L wird von einer Regelelektronik (siehe Schaltbild Fig. 12) so geregelt, dass die Referenz-Photodiode DR, die stets voll ausgeleuchtet ist, einen konstanten Photostrom abgibt (bei konstanter Temperatur entspricht dies einer konstanten Strahlungsleistung).

Die zwischen den Substraten 5, 7 angeordnete Blende 2 schattet im Arbeitsbereich des Wegaufnehmers nur die Photodiode D mehr oder weniger ab, so dass die Photodiode D eine von der Stellung der Blende 2 abhängige Strahlungsleistung empfängt.

Die monolithische Integration beider Photodioden D, DR gewährleistet nun, dass der kritische Temperaturgang des Photostroms für beide Dioden absolut identisch ist und mit Hilfe der an die Referenz-Photodiode DR angeschlossenen Regelelektronik leicht und genau kompensiert werden kann.

Die Linearisierung der Abhängigkeit des Photostroms von der Position der Blende 2 wird in der Anordnung nach Fig. 10A wiederum durch ein Korrekturfilter 6 erreicht, welches in Form einer Folie direkt auf die Abdeckung 18 der Doppel-Photodiode (D, DR) geklebt ist.

Für den elektrischen Anschluss der Leuchtdiode L und der Photodioden D, DR sind auf die Substrate 5, 7 Leiterbahnen aufgebracht (in Fig. 10A sind nur die Leiterbahnen LB1 und LB4 bezeichnet), deren Anordnung in der Draufsicht der Fig. 10B deutlich wird.

Fig. 10B zeigt in der Draufsicht speziell das Empfängersubstrat 7 mit den Leiterbahnen LB1 bis LB4 und die darauf plazierte Doppel-Photodiode (D, DR) mit ihren Anschlüssen. Die Leuchtdiode L mit ihrer Emitterfläche E, das Korrekturfilter 6 und bestimmte Korrektursegmente 17a, b des Korrekturfilters 6 sind in iher Position nur durch gestrichelte Umrisslinien angedeutet.

Von den Leiterbahnen LB1 bis LB4 ist die erste Leiterbahn LB1 als Kathodenkontakt unter das Substrat der Doppel-Photodiode (D, DR) geführt. Die zweite und dritte Leiterbahn LB2 bzw. LB3 dienen jeweils der Anodenkontaktierung der Photodiode D bzw. Referenz-Photodiode DR. Die vierte Leiterbahn LB4 schliesslich ist ausschliesslich als Anschlussleitung für die Leuchtdiode L vorgesehen (zusammen mit der Leiterbahn LB1, die für alle drei Dioden den gemeinsamen Masseanschluss darstellt).

Die kreissegmentförmigen Korrektursegmente 17a, b des Korrekturfilters 6 sind lichtundurchlässige Flächen, welche im Bereich der Blendenverschiebung angeordnet sind und die ungleichmässige Lichtverteilung in Richtung der Blendenverschiebung korrigieren sollen.

Die tatsächliche Form der Korrektursegmente 17a, b hängt von der Lichtverteilung der verwendeten Leuchtdiode L ab und kann anhand der Diodencharakeristik ohne Schwierigkeiten vom Fachmann bestimmt werden. Verschiedene beispielhafte Segmentformen und -anordnungen sind in den Fig. 11A, B, C wiedergegeben.

Beim Korrekturfilter 6 der Fig. 11A handelt es sich um die in Fig. 10B eingezeichneten, am Rande liegenden, zwei Korrektursegmente 17a, b.

Beim Korrekturfilter der Fig. 11B sind die zwei randseitigen Korrektursegmente zu einem in der Mitte liegenden Korrektursegment 17 zusammengefasst.

Beim Korrekturfilter der Fig. 11C ist die gesamte benötigte Korrekturfläche dagegen in drei verteilt angeordnete Korrektursegmente 17a, b, c von jeweils schlankerer Form aufgeteilt.

Die in den Fig. 11A, B, C dargestellten Korrekturfilter 6 können z.B. 50 mal grösser als Maske geschnitten und photo graphisch auf die benötigten Dimensionen verkleinert werden. Die so erhaltene Korrekturfolie kann dann mittels UV-härtbaren Klebstoff auf die Abdeckung 18 der Doppel-Photodiode geklebt werden. Es ist jedoch auch denkbar, die Korrektursegmente 17a, b, c direkt als lichtundurchlässige Aluminium-Metallisierung auf den Photodioden-Chip (D, DR) aufzubringen.

Das Blockschaltbild einer für den Wegaufnehmer nach Fig. 10A, B geeigneten Auswerte-und Regelelektronik ist in Fig. 12 dargestellt:

Die Operationsverstärker V7, V8 mit den Widerständen R12 bis R16 und Kondensatoren C1, 2 bilden in an sich bekannter Weise einen PI-Regler, welcher den Lichtstrom der Leuchtdiode L stabilisiert.

Der Operationsverstärker V9 mit dem Widerstand R19 und dem Kondensator C3 arbeitet als Messverstärker für den Photostrom aus der Photodiode D. Das an seinem Ausgang anliegende asymmetrische Messignal wird in der nachfolgenden Summierschaltung (Operationsverstärker V10, Widerstände R20 ... R22) in ein Nullpunktsymmetrisches, am Signalausgang 18 abnehmbares Positionssignal umgewandelt. Den dazu benötigten Kompensationsstrom liefert (über den Widerstand R18 einstellbar) ein hochstabiles Referenzelement 15 (z.B. vom Typ LM 399). Die Referenzspannung $U_{ref}$ dieses Referenzelements dient gleichzeitig als präziser Sollwert für die Leuchtdioden-Regelelektronik.

Die in den Fig. 10A - 12 dargestellte Ausführungsform weist insbesondere die folgenden Vorteile auf:

-durch Verwendung einer monolithisch integrierten Doppel-Photodiode wird eine optimale Temperaturkompensation erreicht,

-durch Minimierung der Anzahl der Photodioden ist es möglich, die gesamte Auswerte-und Regelelektronik mit einem einzigen 4-fach-Operationsverstärker (z.B. vom Typ LM 324) auszuführen,

-die Linearisierung ist durch Aufbringen des Korrekturfilters direkt auf die Doppel-Photodiode besonders einfach realisierbar.

Insgesamt ist es also nach der Erfindung möglich, einen kompakten, einfachen, sehr empfindlichen und genauen Wegaufnehmer zu bauen, der gerade im Mikrometer-und Submikrometerbereich bei der Justierung von Lichtwellenleitern eine hervorragende Rolle spielen kann.

**Ansprüche**

1. Optoelektronischer Wegaufnehmer zur absoluten Wegmessung im Submikrometerbereich, insbesondere für die Positionierung von Lichtwellenleitern, gekennzeichnet durch

(a) wenigstens eine Lichtquelle,

(b) gegenüber der Lichtquelle wenigstens zwei flächenhafte, nebeneinander angeordnete, thermisch gekoppelte, optoelektronische Strahlungssensoren,

(c) eine den Strahlungssensoren nachgeschaltete Auswerteelektronik,

(d) eine zwischen der Lichtquelle und den Strahlungssensoren angeordnete Blende (2), wobei

(e) die Blende (2) parallel zu den Strahlungssensoren verschiebbar ist, und wobei

(f) die Blende (2) so ausgebildet ist, dass bei einer Verschiebung der Blende (2) die beleuchtete Fläche zumindest des einen Strahlungssensors verändert wird, und

(g) Mittel, die eine homogene Ausleuchtung der Strahlungssensoren gewährleisten.

2. Optoelektronischer Wegaufnehmer nach Anspruch 1, dadurch gekennzeichnet, dass

(a) die Lichtquelle eine im Infraroten emittierende Leuchtdiode (L, L1, L2) ist,

(b) die Strahlungssensoren entsprechende infrarotempfindliche Photodioden (D1, D2) sind,

(c) die Auswerteelektronik die Differenz der Ausgangssignale der Photodioden (D1, D2) bildet, und

(d) die Blende (2) so ausgebildet ist, dass bei einer Verschiebung der Blende (2) in einer Richtung die beleuchtete Fläche der einen Photodiode vergrössert, und die beleuchtete Fläche der anderen Photodiode entsprechend verkleinert wird.

3. Optoelektronischer Wegaufnehmer nach Anspruch 1, dadurch gekennzeichnet, dass

(a) die Lichtquelle eine im Infraroten emittierende Leuchtdiode (L) ist,

(b) die Strahlungssensoren eine entsprechende infrarotempfindliche Photodiode (D) und eine entsprechende infrarotempfindliche Referenz-Photodiode (DR) umfassen,

(c) die Auswerteelektronik eine Regelungselektronik umfasst, welcher das Ausgangssignal der Referenz-Photodiode (DR) zugeführt wird, und die einen geregelten Strom durch die Leuchtdiode (L) liefert,

(d) die Blende (2) so ausgebildet ist, dass bei einer Verschiebung der Blende (2) nur die beleuchtete Fläche der Photodiode (D) verändert wird,

(e) die Photodiode (D) und die Referenz-Photodiode (DR) in Form einer monolithisch integrierten Doppel-Photodiode vorliegen, und

(f) die Mittel zur homogenen Ausleuchtung ein Korrekturfilter (6) umfassen, welches zwischen der Leuchtdiode (L) und der Photodiode (D) angeordnet ist, und dessen Transmission über die Filterfläche so variiert, dass die Inhomogenitäten in der Intensitätsverteilung der Leuchtdiode (L) gerade aufgehoben werden.

4. Optoelektronischer Wegaufnehmer nach Anspruch 2, dadurch gekennzeichnet, dass die Mittel zur homogenen Ausleuchtung ein Korrekturfilter (6) umfassen, welches zwischen der Leuchtdiode (L, L1, L2) und den Photodioden (D1, D2) angeordnet ist, und dessen Transmission über die Filterfläche so variiert, dass die Inhomogenitäten in der Intensitätsverteilung der Leuchtdiode (L, L1, L2) gerade aufgehoben werden.

5. Optoelektronischer Wegaufnehmer nach Anspruch 4, dadurch gekennzeichnet, dass das Korrekturfilter (6) ein mit der Lichtquelle im entsprechenden Abstand belichtetes Filmnegativ ist.

6. Optoelektronischer Wegaufnehmer nach Anspruch 4, dadurch gekennzeichnet, dass

(a) die Leuchtdiode (L, L1, L2) in einem Gehäuse mit planarem Glasfenster (8) untergebracht ist, und

(b) das Korrekturfilter (6) direkt auf das Glasfenster (8) aufgeklebt ist.

7. Optoelektronischer Wegaufnehmer nach Anspruch 2, dadurch gekennzeichnet, dass als Mittel zur homogenen Ausleuchtung wenigstens zwei Leuchtdioden (L1, L2) vorgesehen sind, welche in Richtung der Verschiebungsachse der Blende (2) hintereinander angeordnet sind.

8. Optoelektronischer Wegaufnehmer nach Anspruch 7, dadurch gekennzeichnet, dass

(a) neben den Photodioden (D1, D2) wenigstens eine Referenz-Photodiode (DR) vorgesehen ist, die von den Leuchtdioden (L1, L2) in jeder Stellung der Blende (2) voll ausgeleuchtet wird, und

(b) das Ausgangssignal der Referenz-Photodiode (DR) einer Regelschaltung (14) zugeführt wird, die einen geregelten Strom durch die Leuchtdioden (L1, L2) liefert.

9. Optoelektronischer Wegaufnehmer nach Anspruch 7, dadurch gekennzeichnet, dass

(a) neben jeder der Photodioden (D1, D2) eine Referenz-Photodiode (DR1, DR2) vorgesehen ist, die von jeweils einer der Leuchtdioden (L1, L2) in jeder Stellung der Blende (2) voll ausgeleuchtet wird, und

(b) die Ausgangssignale der Referenz-Photodioden (DR1, DR2) jeweils einer Regelschaltung zugeführt werden, die einen geregelten Strom durch die jeweilige Leuchtdiode (L1, L2) liefert.

10. Optoelektronischer Wegaufnehmer nach Anspruch 2, dadurch gekennzeichnet, dass die Auswerteelektronik für jede Photodiode (D1, D2) einen als stromgesteuerte Spannungsquelle geschalteten Operationsverstärker (V1, V2) umfasst, und die Ausgangssignale dieser Operationsverstärker (V1, V2) einer Differenz-Verstärkerschaltung (V4, V5 bzw. V6) zugeführt werden.

Fig.1

Fig.2

Fig.3A

Fig.3B

Fig.3C

Fig. 4

Fig.5

Fig. 6

D1    L1        DR2   13

12   DR1   7       L2  D2

## Fig.7A

13  DR2  7

5

L1

L2

D2

2

## Fig.7B

5

L1        L2

13

2

DR1    D2

7

## Fig.7C

2        D2

D1        DR2

DR1

## Fig.7D

Fig. 8A

Fig. 8 B

87/072

Fig. 9

Fig.11A

Fig.10A

Fig.10B

Fig.11B

Fig.11C

Fig.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | TECHNISCHES MESSEN, Nr. 6, 1979, Seiten 249-254, München, DE; W. SCHULZ: "Optoelektronische Messverfahren mit Doppeldioden" * Abschnitt 2; Figur 1; Abschnitt 4.1; Figur 9 * | 1-4,10 | G 01 D 5/34 G 01 D 5/26 |
| X | FR-A-2 240 435 (FERNSTEUERGERÄTE KURT OELSCH KG) * Figuren 1-4; Einfuhrung; Seite 4, Zeilen 12-24 * | 1,3,4 | |
| A | PATENT ABSTRACTS OF JAPAN, Band 10, Nr. 26 (P-245)[2083], 31. Januar 1986; & JP-A-60 177 216 (SEIRITSU KOGYO K.K.) 11-09-1985 * Insgesamt * | 1,7,8 | |
| A,P | PATENT ABSTRACTS OF JAPAN, Band 10, Nr. 348 (P-519)[2402], 22. November 1986; & JP-A-61 148 308 (MITSUBISHI HEAVY INDUSTRIES LTD) 07-07-1986 * Insgesamt * | 4-6 | RECHERCHIERTE SACHGEBIETE (Int. Cl.4) G 01 D H 03 M |

Der vorliegende Recherchenbericht wurde für alle Patentansprüche erstellt

| Recherchenort | Abschlußdatum der Recherche | Prüfer |
|---|---|---|
| DEN HAAG | 15-12-1987 | VISSER F.P.C. |